# EUROPÄISCHE PATENTSCHRIFT

(11) **EP 3 788 271 B1**
(45) Veröffentlichungstag und Bekanntmachung des Hinweises auf die Patenterteilung: **23.03.2022**
(21) Anmeldenummer: 19718570.5
(22) Anmeldetag: 16.04.2019
(51) Int. Cl.: F16D 3/76, H02K 11/21

(54) **ELEKTROMOTOR MIT EINER KUPPLUNG ZWISCHEN DER ROTORWELLE UND DER WELLE EINES WINKELSENSORS**
ELECTRIC MOTOR WITH A COUPLING BETWEEN THE ROTOR SHAFT AND THE SHAFT OF AN ANGLE SENSOR
MOTEUR ÉLECTRIQUE AVEC UN ACCOUPLEMENT ENTRE L'ARBRE DU ROTOR ET L'ARBRE D'UN CAPTEUR D'ANGLE

(30) Priorität: 03.05.2018 DE 102018003547
(43) Veröffentlichungstag der Anmeldung: 10.03.2021
(73) Patentinhaber: SEW-EURODRIVE GmbH & Co. KG, 76646 Bruchsal (DE)
(72) Erfinder: RIEGER, Florian, 76227 Karlsruhe (DE); DREXLER, Mario, 76698 Ubstadt-Weiher (DE)
(86) Internationale Anmeldenummer: PCT/EP2019/025107
(87) Internationale Veröffentlichungsnummer: WO 2019/211002

(56) Entgegenhaltungen:
- EP-A1- 2 136 456
- DE-A1- 3 740 061
- DE-A1-102006 043 897
- DE-A1-102008 053 916
- DE-A1-102011 012 632
- DE-B3- 10 361 886
- DE-U1-202006 020 549
- FR-A6- 2 212 871
- GB-A- 576 343
- US-A- 2 900 809

## Beschreibung

Die Erfindung betrifft ein Elektromotor mit Rotorwelle und Winkelsensor.

Es ist allgemein bekannt, dass ein Elektromotor eine Rotorwelle aufweist, deren Winkellage von einem Winkelsensor erfassbar ist.

**Aus der** DE 37 40 061 A1 **ist als nächstliegender Stand der Technik eine Kupplung zur Übertragung von Drehbewegungen bekannt.**

**Aus der** DE 10 2011 012 632 A1 **ist eine Antriebsvorrichtung mit einem Elektromotor** bekannt, wobei eine Welle eines Winkelsensors mittels einer Kupplung mit einer Rotorwelle verbunden ist.

**Aus der** DE 10 2006 043 897 A1 **ist eine Wellenkupplung bekannt.**

**Aus der** DE 10 2008 053 916 A1 **ist eine** Kupplung sowie eine

**Vorrichtung zum Überlagern von Bewegungen** mit der Kupplung **bekannt.**

**Aus der** EP 2 136 456 A1 **ist ein Bausatz-Servomotor** bekannt, wobei eine Geberwelle mittels einer Kupplung mit einer Hohlwelle des Rotors verbunden ist.

**Aus der** GB 576 343 A **ist eine Verbesserung bei flexiblen Kupplungen bekannt.**

**Aus der** DE 103 61 886 B3 **ist ein Drehgeber** mit einer Hohlwelle zum Verbinden mit einer Rotorwelle **bekannt.**

**Aus der** FR 2 212 871 A6 **ist eine Kardanwellenverbindung bekannt.**

**Aus der** US 2 900 809 A **ist schallisolierende Kupplung bekannt.**

Der Erfindung liegt daher die Aufgabe zugrunde, einen Elektromotor mit Winkelsensor weiterzubilden.

Erfindungsgemäß wird die Aufgabe bei dem Elektromotor nach den in Anspruch 1 angegebenen Merkmalen gelöst.

Wichtige Merkmale der Erfindung bei dem Elektromotor mit Rotorwelle und Winkelsensor sind, dass eine Welle des Winkelsensors über eine Kupplung mit der Rotorwelle verbunden ist,
wobei die Kupplung ein erstes und ein zweites Kupplungsteil aufweist,
wobei das erste Kupplungsteil drehfest mit der Rotorwelle verbunden ist und das zweite Kupplungsteil drehfest mit der Welle des Winkelsensors verbunden ist,
wobei zwischen dem ersten und zweiten Kupplungsteil ein Dämpfungsteil angeordnet ist,
wobei das Dämpfungsteil kraftschlüssig mit dem ersten und zweiten Kupplungsteil verbunden ist.

Von Vorteil ist dabei, dass Drehmoment-Rucke oder Stöße, welche von einer elektromagnetisch betätigbaren Bremse des Elektromotors und/oder von einer vom Elektromotor angetriebenen Last in die Rotorwelle eingeleitet werden, vom Winkelsensor fernhaltbar sind. Auf diese Weise ist eine fehlerarme Erfassung der Winkelstellung der Rotorwelle ermöglicht. Außerdem ist die mechanische Belastung des Winkelsensors reduzierbar.

**Erfindungsgemäß** weist das Dämpfungsteil eine äußere Ringwand und eine innere Ringwand auf, welche über einen Jochbereich des Dämpfungsteils verbunden sind,
wobei die äußere Ringwand gegen einen Bereich des ersten Kupplungsteils nach radial außen drückt, insbesondere gegen die Innenwandung einer axial durchgehenden Ausnehmung des ersten Kupplungsteils,
wobei die innere Ringwand gegen einen Bereich des zweiten Kupplungsteils nach radial innen drückt, insbesondere gegen die Außenwand des zweiten Kupplungsteils. Von Vorteil ist dabei, dass die Winkellage der Rotorwelle kraftschlüssig an die Welle des Sensors übertragen wird. Somit ist kein Spiel vorhanden und die Winkellage ist korrekt erfassbar. Allerdings werden Quer- und Längsbewegungen der Rotorwelle mittels des Dämpfungsteils abgedämpft, da das Dämpfungsteil einen federartigen Aufbau aufweist und vorzugsweise aus einem Kunststoff gefertigt ist, wobei die Kupplungsteile vorzugsweise aus Stahl gefertigt sind. Als Kunststoff wird bevorzugt ein thermoplastischer hochfester und hochtemperaturbeständiger Kunststoff verwendet, insbesondere Polyetheretherketon (PEEK).

Bei einer vorteilhaften Ausgestaltung weist das Dämpfungsteil an seiner äußeren Ringwand zumindest einen, nach radial außen hervorstehenden Nasenbereich auf, der in eine am ersten Kupplungsteil angeordnete Ringnut hineinragt, insbesondere wobei die Ringachse der Ringnut die Drehachse der Rotorwelle ist, insbesondere wobei die Ringnut umlaufend ist und/oder wobei der Nasenbereich in Umfangsrichtung mehrfach unterbrochen ausgeführt ist, wobei das Dämpfungsteil an seiner inneren Ringwand zumindest einen, nach radial innen hervorstehenden Nasenbereich aufweist, der in eine am zweiten Kupplungsteil angeordnete Ringnut hineinragt, insbesondere wobei die Ringachse dieser Ringnut die Drehachse der Rotorwelle ist, insbesondere wobei die Ringnut umlaufend ist und/oder wobei der Nasenbereich in Umfangsrichtung mehrfach unterbrochen ausgeführt ist. Von Vorteil ist dabei, dass das Dämpfungsteil axial fixierbar ist. Insbesondere werden die vom Jochbereich abgewandten axialen Endbereiche der Ringwände axial fixiert und somit wird das gesamte Dämpfungsteil fixiert. Hierdurch wird insbesondere sichergestellt, dass auch bei langanhaltender starker Quer- und Längsauslenkung der Rotorwelle keine axiale Verschiebung des Dämpfungsteils auftritt.

Insbesondere wird das elastisch gespannte Dämpfungsteil in radialer Richtung gespannt, so dass ein Kraftschluss gewährleistbar ist, insbesondere auch bei Querauslenkungen der Rotorwelle. Bei einer vorteilhaften Ausgestaltung weist das erste Kupplungsteil an der Innenseite eine Axialnut auf, in welche ein an der äußeren Ringwand nach radial außen hervorstehender, sich axial erstreckender Bereich, insbesondere Außenlängsnase, hineinragt, wobei ein erstes Spiel in Umfangsrichtung zwischen dem nach radial außen hervorstehenden Bereich, insbesondere der Außenlängsnase und den Nutwänden der Axialnut, vorhanden ist.

Bei einer alternativen oder zusätzlichen vorteilhaften Ausgestaltung weist das zweite Kupplungsteil der Außenseite eine axial gerichtete Längsnut auf, in welche ein an der inneren Ringwand nach radial innen hervorstehender, sich axial erstreckender Bereich, insbesondere Innenlängsnase, hineinragt, wobei ein zweites Spiel in Umfangsrichtung zwischen dem nach radial innen hervorstehenden

Bereich, insbesondere der Innenlängsnase, und den Nutwänden der axial gerichteten Längsnut vorhanden ist. Von Vorteil ist dabei, dass bei Überlastung der kraftschlüssigen Verbindung zwischen Dämpfungsteil und jeweiligem Kupplungsteil ein spielbehafteter Formschluss in Umfangsrichtung vorhanden ist.

Bei einer vorteilhaften Ausgestaltung ist am zweiten Kupplungsteil ein nach radial außen hervorstehender Zapfenbereich ausgeformt, welcher in eine am ersten Kupplungsteil ausgeformte Ausnehmung hineinragt, wobei ein drittes Spiel in Umfangsrichtung zwischen dem Zapfenbereich und der Ausnehmung, insbesondere den Wänden der Ausnehmung, vorhanden ist, insbesondere wobei das dritte Spiel größer ist als das erste Spiel, als das zweite Spiel oder als die Summe aus erstem und zweitem Spiel, insbesondere wobei der vom Zapfenbereich und die Ausnehmung überdeckte axiale Bereich zwischen dem von der Rotorwelle überdeckten axialen Bereich und dem vom Berührbereich zwischen Dämpfungsteil und einem der beiden Kupplungsteile überdeckten axialen Bereich angeordnet ist.

Bei einer alternativen vorteilhaften Ausgestaltung ist am zweiten Kupplungsteil eine nach radial innen ausgeformte Ausnehmung ausgeformt, in welche ein am ersten Kupplungsteil nach radial innen hervorragender Zapfenbereich hineinragt, wobei ein drittes Spiel in Umfangsrichtung zwischen dem Zapfenbereich und der Ausnehmung, insbesondere den Wänden der Ausnehmung, vorhanden ist, insbesondere wobei das dritte Spiel größer ist als das erste Spiel, als das zweite Spiel oder als die Summe aus erstem und zweitem Spiel, insbesondere wobei der vom Zapfenbereich und die Ausnehmung überdeckte axiale Bereich zwischen dem von der Rotorwelle überdeckten axialen Bereich und dem vom Berührbereich zwischen Dämpfungsteil und einem der beiden Kupplungsteile überdeckten axialen Bereich angeordnet ist. Von Vorteil ist dabei, dass bei Überlastung zunächst die kraftschlüssige Verbindung versagt, so dass die Außenlängsnase an eine Nutwand der Axialnut des ersten Kupplungsteils angedrückt wird und so, dass die Innenlängsnase an eine Nutwand der Axialnut des zweiten Kupplungsteils angedrückt wird.

Bei einer vorteilhaften Ausgestaltung weist das Dämpfungsteil in Umfangsrichtung voneinander, insbesondere regelmäßig, beabstandete durch das Dämpfungsteil durchgehende Ausriehmungen auf,
wobei der von den Ausnehmungen überdeckte axiale Bereich axial zwischen dem Jochbereich und dem vom Berührbereich zwischen Dämpfungsteil und einem der beiden Kupplungsteile überdeckten axialen Bereich angeordnet ist. Von Vorteil ist dabei, dass die Elastizität mittels der Ausnehmungen vergrößert ist.

Bei einer vorteilhaften Ausgestaltung ist die Welle des Winkelsensors mittels einer axial durchgehenden Stufenbohrung hohl ausgeführt, so dass eine Schraube durch die Welle des Winkelsensors hindurchgeführt ist und ein Außengewindebereich der Schraube in ein Innengewinde des zweiten Kupplungsteils eingeschraubt ist, wobei der Schraubenkopf der Schraube gegen eine Stufe der Stufenbohrung drückt zum Andrücken der Welle des Winkelsensors an das zweite Kupplungsteil.

Von Vorteil ist dabei, dass eine einfache Befestigung verwendbar ist, wobei der außenkonusförmige Bereich der Welle des Winkelsensors an einen innenkonusförmigen Bereich des zweiten Kupplungsteils angedrückt wird, insbesondere zur Selbsthemmung.

Bei einer vorteilhaften Ausgestaltung weist die Rotorwelle eine axial gerichtete Gewindebohrung auf, in welche der Außengewindebereich einer Schraube eingeschraubt ist, welche durch eine durch das erste Kupplungsteil durchgehende Stufenbohrung durchgeführt ist und deren Schraubenkopf an einer Stufe der Stufenbohrung angedrückt ist, wobei die Stufenbohrung mittig im ersten Kupplungsteil angeordnet ist. Von Vorteil ist dabei, dass eine einfache Befestigung verwendbar ist, wobei der außenkonusförmige Bereich des ersten Kupplungsteils Welle an einen innenkonusförmigen Bereich der Rotorwelle angedrückt wird, insbesondere zur Selbsthemmung.

Bei einer vorteilhaften Ausgestaltung wird von der in die Rotorwelle eingeschraubten Schraube ein außenkonusförmiger Bereich des ersten Kupplungsteils an einen innenkonusförmigen Bereich der Rotorwelle angedrückt. Von Vorteil ist dabei, dass die konusförmigen Bereiche bei der Montage zum Einfädeln geeignet sind und im verbundenen Zustand eine selbsthemmende Verbindung erreichbar ist, insbesondere bei der Materialpaarung Stahl mit Stahl.

Bei einer vorteilhaften Ausgestaltung wird von der in das zweite Kupplungsteil eingeschraubten Schraube ein außenkonusförmiger Bereich der Welle des Winkelsensors an einen innenkonusförmigen Bereich des zweiten Kupplungsteils angedrückt. Von Vorteil ist dabei, dass die konusförmigen Bereiche bei der Montage zum Einfädeln geeignet sind und im verbundenen Zustand eine selbsthemmende Verbindung erreichbar ist, insbesondere bei der Materialpaarung Stahl mit Stahl.

Weitere Vorteile ergeben sich aus den Unteransprüchen.

Die Erfindung wird nun anhand von schematischen Abbildungen näher erläutert:

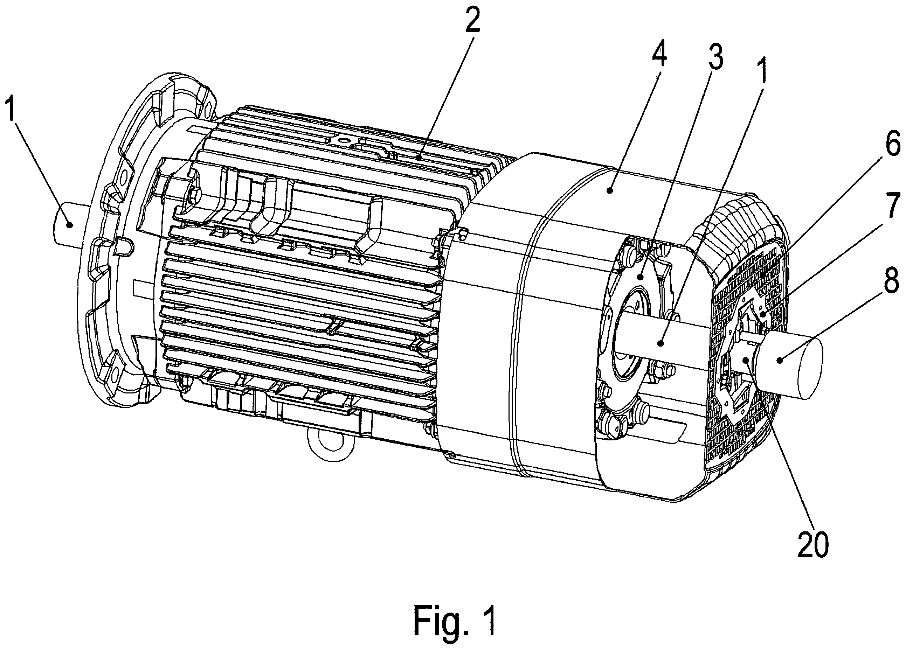

In der Figur 1 ist ein erfindungsgemäßer Elektromotor mit Bremse und Winkelsensor 8 in Schrägansicht dargestellt.

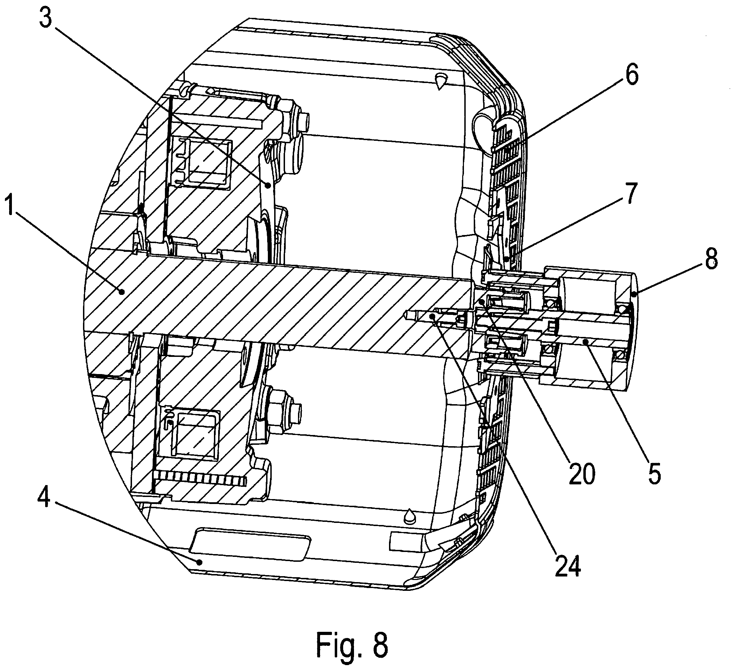

In der Figur 8 ist ein Ausschnitt des Motors angeschnitten dargestellt.

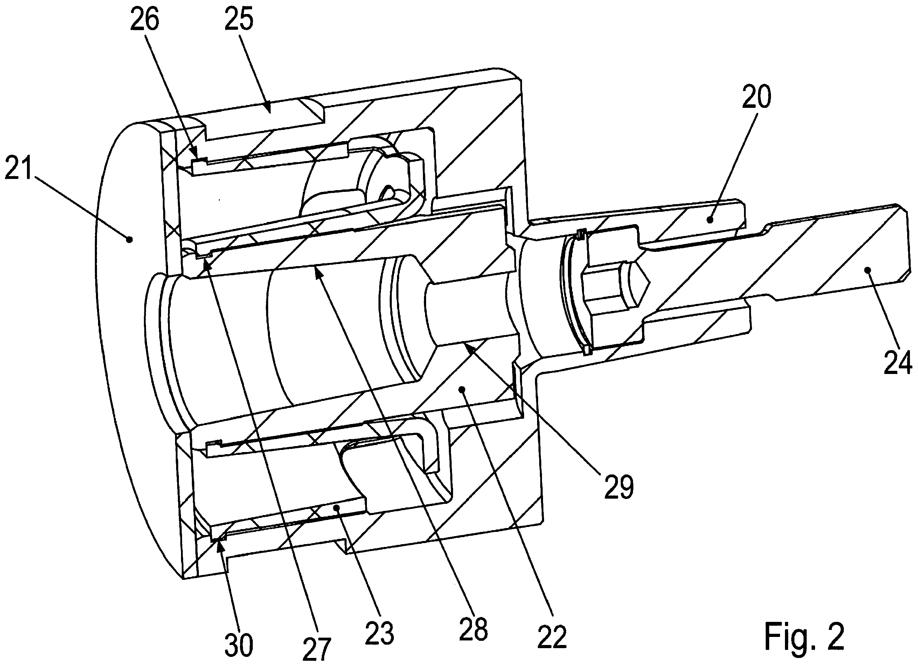

In der Figur 2 ist eine zwischen dem Winkelsensor 8 und der Rotorwelle 1 des Elektromotors anordenbare, ein Dämpfungsteil 23 aufweisende Kupplung angeschnitten dargestellt.

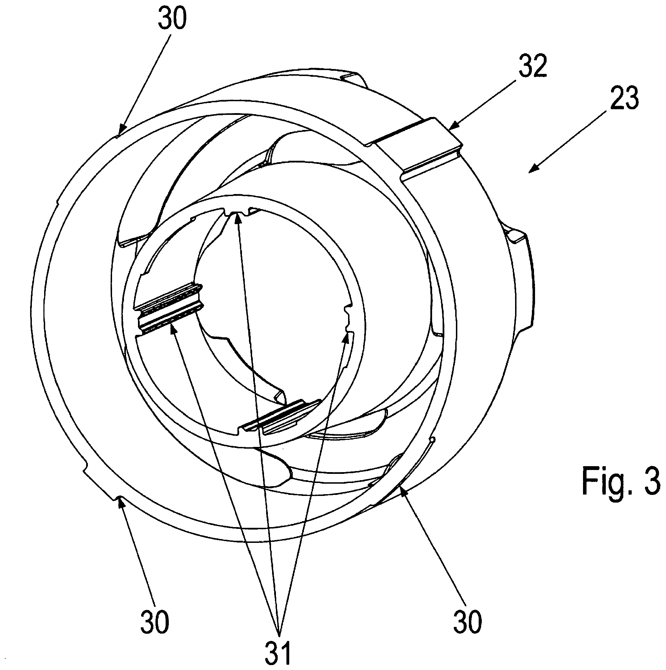

In der Figur 3 ist das Dämpfungsteil 23 in einer ersten Blickrichtung in Schrägansicht dargestellt.

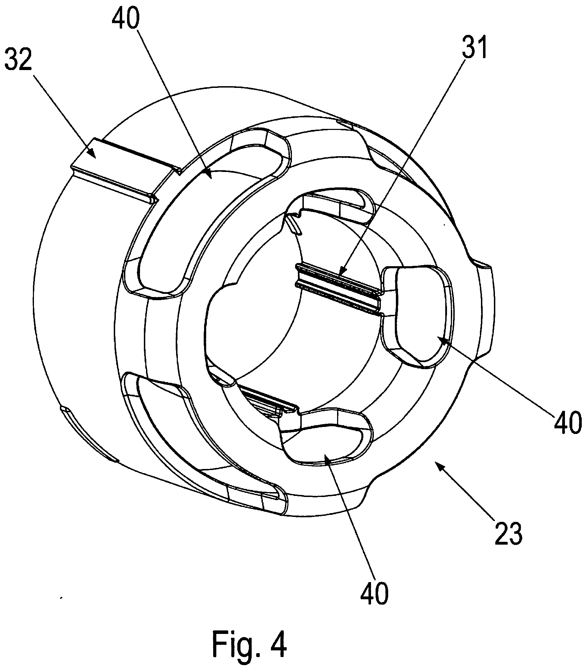

In der Figur 4 ist das Dämpfungsteil 23 in einer anderen Blickrichtung in Schrägansicht dargestellt.

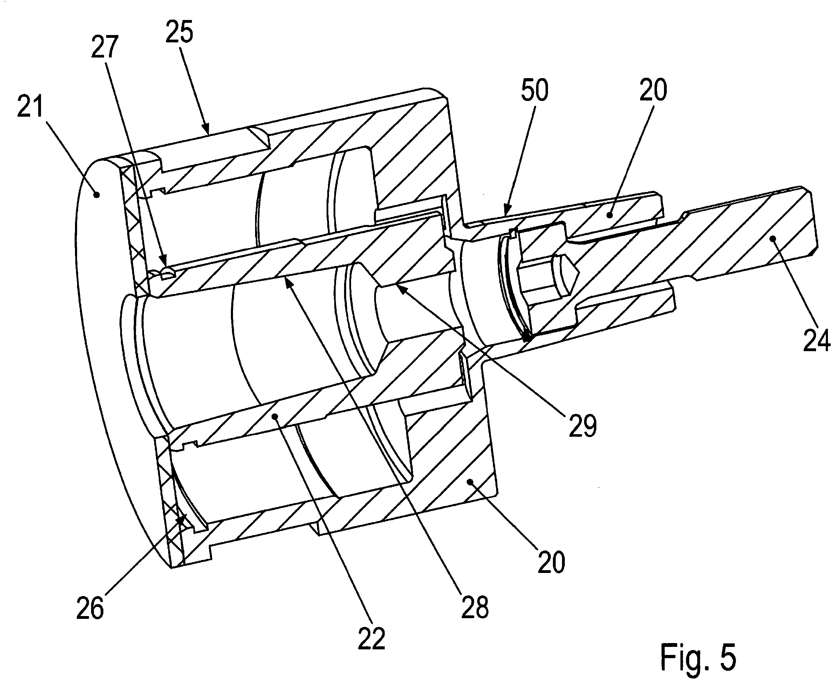

In der Figur 5 ist eine weitere Schnittansicht durch die Kupplung dargestellt, wobei das Dämpfungsteil ausgeblendet ist.

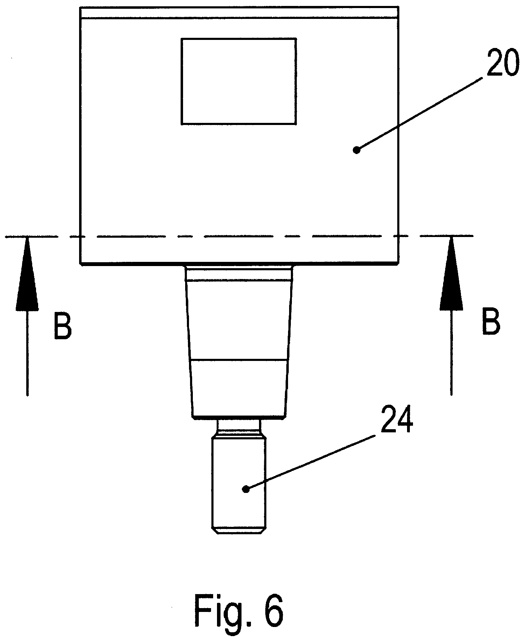

In der Figur 6 ist eine Außenansicht der Kupplung dargestellt, wobei eine Schnittebene B gekennzeichnet ist.

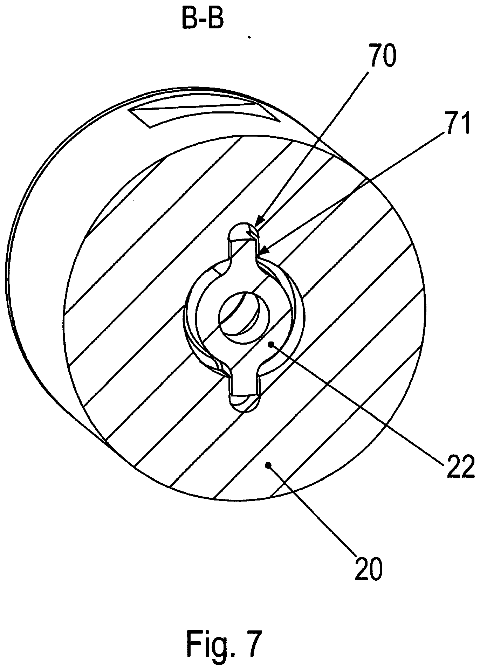

In der Figur 7 ist ein Querschnitt der Kupplung durch die Schnittebene B dargestellt.

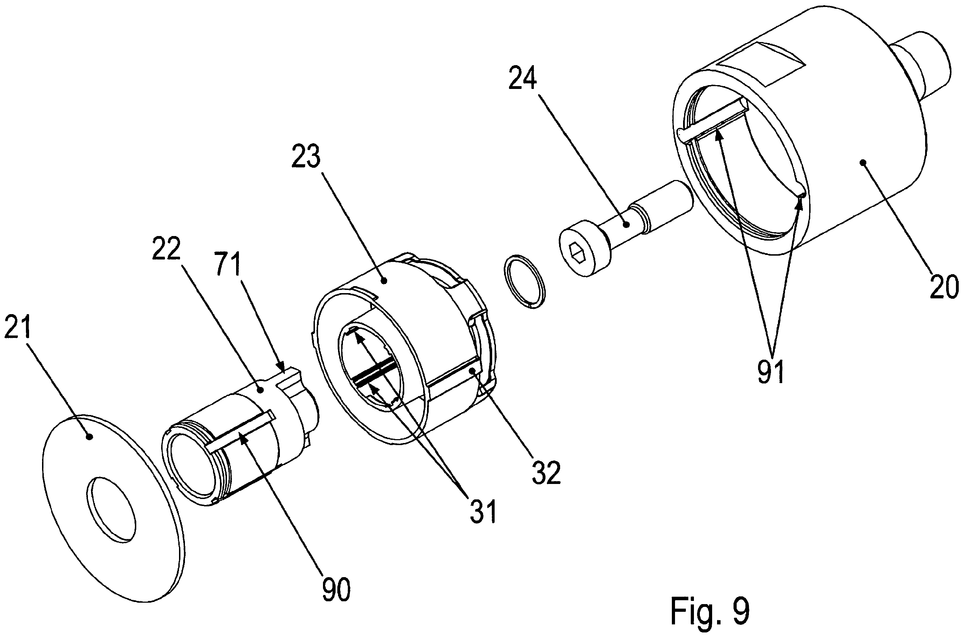

In der Figur 9 ist die Kupplung explodiert in Schrägansicht dargestellt.

Wie in den Figuren dargestellt, weist ein erfindungsgemäßer Elektromotor eine Rotorwelle 1 auf, welche mittels Lagern drehbar gelagert ist in einem Statorgehäuse 2, mit welchem der Magnetkörper 3 einer elektromagnetisch betätigbaren Bremse lösbar verbunden ist.

Im Magnetkörper 3 ist eine in Umfangsrichtung zur Drehachse der Rotorwelle 1 umlaufende Ringnut oder Vertiefung angeordnet, in welcher eine bestrombare Spule aufgenommen ist.

Eine zum Magnetkörper 3 axial bewegbare, aber drehfest mit dem Magnetkörper 3 verbundene Ankerscheibe, die vorzugsweise aus ferromagnetischem Stahl gefertigt ist, wird bei Bestromung der Spule zur Spule hingezogen und bei Nichtbestromung von einem am Magnetkörper abgestützten Federelement von der Spule weggedrückt.

Bei Bestromung muss also die vom Federelement erzeugte Federkraft überwunden werden durch die Anziehungskraft des Elektromagneten.

Mit der Rotorwelle ist ein eine Außenverzahnung aufweisendes Teil drehfest verbunden oder eine Außenverzahnung ist auf der Rotorwelle angebracht. Ein Bremsbelagträger, welcher eine Innenverzahnung aufweist, ist auf die Außenverzahnung aufgesteckt, so dass die Innenverzahnung mit der Außenverzahnung im Eingriff ist und der Bremsbelagträger axial verschiebbar, aber mittels der miteinander im Eingriff befindlichen Innenverzahnung und Außenverzahnung drehfest mit der Rotorwelle verbunden ist.

Bei Nichtbestromung drückt das Federelemente die Ankerscheibe auf den Bremsbelagträger, der auf eine auf der von der Ankerscheibe abgewandten Seite des Bremsbelagträgers angeordnete Bremsfläche gedrückt wird.

Bei Betätigung oder Zustandsänderung der Bremse wird ein Drehmomentruck und oder eine Stoßbelastung auf die Rotorwelle 1 eingeleitet. Aber auch von einer von der Rotorwelle 1 angetriebenen Last ist ein Drehmomentruck und oder eine Stoßbelastung auf die Rotorwelle 1 einleitbar. Am von der Last axial abgewandten Ende der Rotorwelle ist ein Sensor zur Erfassung der Winkellage der Rotorwelle 1 angeordnet.

Das Gehäuse des Sensors 8, also Winkelsensors, ist über ein Drehmomentstützteil 7, an einem Lüfterhaubengitter 6 einer Lüfterhaube 4 abgestützt. Eine Welle 5 ist mit dem drehbaren Teil des Sensors 8 drehfest verbunden.

Die Welle 5 ist mit der Rotorwelle 1 über eine Kupplung verbunden, welche ein erstes Kupplungsteil 20 aufweist, das drehfest mit der Rotorwelle 1 verbunden ist, und ein zweites Kupplungsteil 22 aufweist, dass mit der Welle 5 drehfest verbunden ist. Zwischen dem ersten Kupplungsteil 20 und dem zweiten Kupplungsteil 22 ist ein Dämpfungsteil 23 angeordnet, welches im Normalbetrieb kraftschlüssig an beiden Kupplungsteilen (20, 22) anliegt und somit die Drehbewegung der Rotorwelle 1 zur Welle 5 hin spielfrei durchleitet. Mittels des Sensors 8 ist somit eine hochgenaue Erfassung der Winkellage der Rotorwelle 1 ermöglicht.

Die Welle 5 ist zur drehfesten Verbindung mit dem zweiten Kupplungsteil 22 mit einem außenkonusförmigen Abschnitt versehen, so dass ein Einfädeln in einen entsprechenden innenkonusförmigen Bereich 28 des zweiten Kupplungsteils 22 in einfacher Weise ermöglicht ist. Die Welle 5 ist hohl ausgeführt, so dass eine Schraube vom von der Rotorwelle 1 abgewandten Ende der Welle 5 her durch die Welle 5 durchführbar ist und der Gewindebereich der Schraube in ein entsprechendes Innengewinde 29 des zweiten Kupplungsteils 22 eingeschraubt ist. Der Schraubenkopf der Schraube liegt hierbei an einer Stufe der Innenbohrung der hohl ausgeführten Welle 5 an. Die Innenbohrung ist somit als durch die Welle 5 durchgehende Stufenbohrung ausgeführt.

Mittels der Schraube ist also der außenkonusförmige Bereich an den innenkonusförmigen Bereich 28 angedrückt, so dass die Welle 5 mit dem zweiten Kupplungsteil 22 drehfest verbunden ist.

Ebenso ist eine durchgehende Stufenbohrung im ersten Kupplungsteil 20 eingebracht, so dass eine Schraube 24 von der von der Rotorwelle 1 her abgewandten Seite durch das erste Kupplungsteil 20 hindurchführbar ist und der Gewindebereich der Schraube 24 in ein Innengewinde der Rotorwelle 1 eingeschraubt ist.

Außerdem weist auch das erste Kupplungsteil 20 einen außenkonusförmigen Bereich 50, der an einem innenkonusförmigen Bereich der Rotorwelle 1 anliegt.

Der Schraubenkopf der Schraube 24 liegt ebenfalls an einer Stufe der durchgehenden Stufenbohrung an, so dass das erste Kupplungsteil 20 mit seinem außenkonusförmigen Bereich 50 an den entsprechenden innenkonusförmigen Bereich der Rotorwelle von der Schraube 24 angedrückt wird.

Das Dämpfungsteil 23 ist zwischen dem ersten und zweiten Kupplungsteil (20, 22) angeordnet.

Hierzu weist das Dämpfungsteil 23 eine äußere Ringwand auf, welche zumindest teilweise am ersten Kupplungsteil 20 anliegt und eine innere Ringwand auf, welche zumindest teilweise am zweiten Kupplungsteil 22 anliegt. Dabei sind die innere und äußere Ringwand über einen Jochbereich verbunden.

Der von der inneren Ringwand überdeckte Radialabstandsbereich ist beabstandet vom von der äußeren Ringwand überdeckten Radialabstandsbereich und ist radial innerhalb der äußeren Ringwand angeordnet.

Der von der inneren Ringwand überdeckte Axialbereich gleicht oder überlappt mit dem von der äußeren Ringwand überdeckten Axialbereich. Der die beiden Ringwände verbindende Jochbereich ist an dem der Rotorwelle 1 zugewandten axialen Endbereich der inneren und äußeren Ringwand mit den beiden Ringwänden verbunden.

Das Dämpfungsteil 23 ist in einen radialen Zwischenraumbereich zwischen dem ersten und zweiten Kupplungsteil (20, 22) eingeschoben und dabei radial elastisch gespannt. Somit drückt also ein Teilbereich der äußeren Ringwand an das erste Kupplungsteil 20 und ein Teilbereich der innere Ringwand an das zweite Kupplungsteil 22.

Zur axialen Arretierung des Dämpfungsteils 23 weist dieses in Umfangsrichtung insbesondere regelmäßig voneinander beabstandete nach radial außen hervorstehende Nasen an seiner äußeren Ringwand auf, welche in eine Ringnut 26 des ersten Kupplungsteils 20 hineinragen. Außerdem weist das Dämpfungsteil 23 in Umfangsrichtung insbesondere regelmäßig voneinander beabstandete nach radial innen hervorstehende Nasen an seiner inneren Ringwand auf, welche in eine Ringnut 27 des zweiten Kupplungsteils 22 hineinragen.

Eine Abdeckscheibe 21 ist mit dem ersten und zweiten Kupplungsteil 20, 22 verbunden, so dass der das Dämpfungsteil 23 aufnehmende Zwischenraumbereich zwischen dem ersten und zweiten Kupplungsteil 20, 22 auf der von der Rotorwelle abgewandten Seite der Kupplung abgedeckt ist.

Die Abdeckscheibe 21 ist dabei vorzugsweise aus einem Elastomer gefertigt, insbesondere um die Nachgiebigkeit des Dämpfungselements möglichst gering zu beeinflussen. Die Abdeckscheibe ist vorzugsweise mit dem ersten und zweiten Kupplungsteil (20, 22) klebeverbunden.

Das Dämpfungsteil 23 weist an der Außenseite der äußeren Ringwand zumindest einen nach radial außen hervorstehenden, sich axial erstreckenden Bereich, der als Außenlängsnase 32 bezeichnet wird, auf. Diese Außenlängsnase 32 ragt in eine entsprechende sich in axialer Richtung erstreckende Innennut, also Axialnut, am ersten Kupplungsteil 20, so dass ein vorzugsweise spielbehafteter Formschluss in Umfangsrichtung zwischen dem Dämpfungsteil 23 und dem ersten Kupplungsteil 20 bewirkt ist.

Das Dämpfungsteil 23 weist an der Innenseite der inneren Ringwand zumindest einen nach radial innen hervorstehenden, sich axial erstreckenden Bereich, der als Innenlängsnase 31 bezeichnet wird, auf. Diese Innenlängsnase 31 ragt in eine entsprechende sich in axialer Richtung erstreckende Nut, also Axialnut, am zweiten Kupplungsteil 22, so dass ein vorzugsweise spielbehafteter Formschluss in Umfangsrichtung zwischen dem Dämpfungsteil 23 und dem zweiten Kupplungsteil 22 bewirkt ist.

Wie in Figur 4 deutlich gezeigt, weist das Dämpfungsteil 23 in Umfangsrichtung voneinander vorzugsweise regelmäßig beabstandete Ausnehmungen 40 auf, die axial zwischen dem Jochbereich und dem Berührbereich zwischen äußerer Ringwand und Dämpfungsteil 23 beziehungsweise zwischen innerer Ringwand und Dämpfungsteil 23 angeordnet sind.

Die Ausnehmung 40 bewirken eine Erhöhung der Elastizität des Dämpfungsteils 23.

Beim Schraubverbinden während der Montage oder im anderweitigen Überlastungsfall versagt die kraftschlüssige Verbindung zwischen dem Dämpfungsteil 23 und den Kupplungsteilen (20, 22) und es werden die Innenlängsnase 31 und die Außenlängsnase 32 in oder entgegen der Umfangsrichtung relativ zu den Kupplungsteilen (20, 22) bis zum Anschlagen an eine jeweilige Nutwand des jeweiligen Kupplungsteils (20, 22) bewegt.

Bei größerem Drehmoment wird Drehmoment direkt zwischen erstem Kupplungsteil 20 und zweiten Kupplungsteil 22 übertragen. Hierzu ist das erste Kupplungsteil mit einer nach radial außen sich erstreckenden Ausnehmung 70 ausgeführt, in welche ein radial hervorstehender Zapfenbereich 71 hineinragt. Im genannten Überlastungsfall wird das Spiel überwunden und die beiden Kupplungsteile (20, 22) berühren sich direkt. Somit berühren sich also die Wandung der Ausnehmung 70 und des Zapfenbereichs 71.

Allerdings erstrecken sich die Ausnehmung 70 und der Zapfenbereich 71 axial nur über einen Axialbereich, welcher zwischen dem von der Schraube 24 überdeckten axialen Bereich und dem vom Dämpfungsteil 23 überdeckten axialen Bereich angeordnet ist.

Somit ist dann eine direkte Drehmomentübertragung ermöglicht und ein Gegenhalten mit einem Schraubenschlüssel bei der Montage ist nicht notwendig. Außerdem ist das Dämpfungsteil 23 vor Überlastung geschützt und somit die Sicherheit erhöht.

Das Spiel des Zapfenbereichs 71 in der Ausnehmung 70 ist größer als das Spiel der Außenlängsnase 32 in der Axialnut des ersten Kupplungsteils 20.

Das Spiel des Zapfenbereichs 71 in der Ausnehmung 70 ist größer als das Spiel der Innenlängsnase 31 in der Axialnut des zweiten Kupplungsteils 22.

Somit wird bei Versagen des elastisch bewirkten Kraftschlusses und bei Versagen des Formschlusses über das Dämpfungsteil 23 ein Formschluss in Umfangsrichtung direkt zwischen den Kupplungsteilen (20, 22) wirksam.

Das Dämpfungsteil 23 ist aus einem Kunststoff gefertigt, insbesondere aus einem thermoplastischen Kunststoff, insbesondere aus Polyetheretherketon (PEEK). Die Kupplungsteile (20, 22) sind metallisch ausgeführt, insbesondere aus Stahl.

Die Erfindung bewirkt eine vorteilhafte Montage. Hierzu wird nämlich zuerst die Kupplung, also das erste Kupplungsteil 20 mit der Rotorwelle 1 verbunden, indem eine durch das erste Kupplungsteil 20 hindurchgeführte Schraube in die Rotorwelle 1 eingeschraubt wird. Dabei ist bei eingefallener Bremse kein Gegenhalten an der Rotorwelle 1 notwendig. Falls keine Bremse vorhanden sein sollte oder die Bremse mit einer Handlüftung gelüftet ist, ist ein Gegenhalten am ersten Kupplungsteil 20 ermöglicht, welches hierzu an seinem Außenumfang einen Abflachung 25 aufweist.

Nach Verbinden der Kupplung mit der Rotorwelle wird der drehbare Teil des Sensors 8, also Welle 5, verbunden. Hierzu wird die Sensorwelle, also Welle 5 in das zweite Kupplungsteil 22 eingesteckt, so dass die konusförmigen Bereiche der Welle 5 und des zweiten Kupplungsteils 22 aneinander anliegen. Danach wird eine Schraube durch die hohle Welle 5, also Sensorwelle, hindurch mit ihrem Gewindebereich in das Innengewinde 29 des zweiten Kupplungsteils 22 eingeschraubt.

Ein Gegenhalten am zweiten Kupplungsteil 22 ist hierbei nicht notwendig. Denn durch das hohe Drehmoment beim Einschrauben kommt der Formschluss in Umfangsrichtung zwischen zweiten Kupplungsteil 22 und erstem Kupplungsteil 20 zum Tragen.

Bei eingefallener Bremse bewirkt also die Bremse ein Gegenhalten. Falls keine Bremse vorhanden sein sollte oder die Bremse mit einer Handlüftung gelüftet ist, ist ein Gegenhalten am ersten Kupplungsteil 20 ermöglicht, welches hierzu an seinem Außenumfang einen Außensechskantbereich aufweist.

Wie in Figur 9 gezeigt, weist das Dämpfungsteil 23 an seiner äußeren Ringwand eine sich axial erstreckende Außenlängsnase 32 auf, die in eine Axialnut 91 am Innenumfang des ersten Kupplungsteils 20 hineinragen. Die Außenlängsnasen 32 stehen dabei nach radial außen hervor.

Entsprechend stehen sich axial erstreckende Innenlängsnasen 31 am Innenumfang der inneren Ringwand des Dämpfungsteils 23 nach radial innen hervor und ragen in axial gerichtete Längsnuten 90 hinein. Somti ist auch hier eine in Umfangsrichtung formschlüssige Sicherung des Dämpfungsteils 23 bewirkt.

Bei weiteren erfindungsgemäßen Ausführungsbeispielen ist das Spiel des Zapfenbereichs 71 in der Ausnehmung 70 ist vorzugsweise größer als die Summe aus dem Spiel der Außenlängsnase 32 in der Axialnut des ersten Kupplungsteils 20 und aus dem Spiel der Innenlängsnase 31 in der Axialnut des zweiten Kupplungsteils 22.

Somit wird bei Versagen des elastisch bewirkten Kraftschlusses und/oder bei Versagen des Formschlusses über das Dämpfungsteil 23 ein Formschluss in Umfangsrichtung direkt zwischen den Kupplungsteilen (20, 22) wirksam.

Bei weiteren erfindungsgemäßen Ausführungsbeispielen ist das Dämpfungsteil anstatt aus Kunststoff aus einem vorzugsweise dünnen Blech gefertigt.

Bei weiteren erfindungsgemäßen Ausführungsbeispielen sind die Kupplungsteile anstatt aus Metall aus einem Kunststoff gefertigt.

### Bezugszeichenliste

- 1: Rotorwelle
- 2: Statorgehäuse
- 3: Magnetkörper der Bremse
- 4: Lüfterhaube
- 5: Welle
- 6: Lüfterhaubengitter
- 7: Drehmomentstützteil
- 8: Winkelsensor
- 20: erstes Kupplungsteil, insbesondere rotorwellenseitiges Kupplungsteil
- 21: Abdeckscheibe
- 22: zweites Kupplungsteil, insbesondere sensorseitiges Kupplungsteil
- 23: Dämpfungsteil
- 24: Schraube
- 25: Abflachung
- 26: Ringnut, insbesondere innenseitige Ringnut
- 27: Ringnut, insbesondere außenseitige Ringnut
- 28: innenkonusförmiger Bereich
- 29: Innengewinde
- 30: Nase
- 31: Innenlängsnase
- 32: Außenlängsnase
- 40: Ausnehmung
- 50: außenkonusförmigen Bereich
- 70: Ausnehmung
- 71: Zapfenbereich
- 90: axial gerichtete Längsnut
- 91: Axialnut

## Patentansprüche

1. Elektromotor mit Rotorwelle (1) und Winkelsensor (8),
wobei eine Welle (5) des Winkelsensors (8) über eine Kupplung mit der Rotorwelle (1) verbunden ist
wobei die Kupplung ein erstes und ein zweites Kupplungsteil (20, 22) aufweist,
wobei das erste Kupplungsteil (20) drehfest mit der Rotorwelle (1) verbunden ist und das zweite Kupplungsteil (22) drehfest mit der Welle (5) des Winkelsensors (8) verbunden ist,
**wobei** zwischen dem ersten und zweiten Kupplungsteil (20, 22) ein Dämpfungsteil (23) angeordnet ist,
wobei das Dämpfungsteil (23) kraftschlüssig mit dem ersten und zweiten Kupplungsteil (20, 22) verbunden ist,
**dadurch gekennzeichnet, dass**
**das Dämpfungsteil** (23) **eine äußere Ringwand und eine innere Ringwand aufweist, welche über einen Jochbereich des Dämpfungsteils** (23) **verbunden sind,**
**wobei die äußere Ringwand gegen einen Bereich des ersten Kupplungsteils** (20) **nach radial außen drückt, insbesondere gegen die Innenwandung einer axial durchgehenden Ausnehmung des ersten** Kupplungsteils (20),
**wobei die innere Ringwand gegen einen Bereich des zweiten Kupplungsteils** (22) **nach radial innen drückt, insbesondere gegen die Außenwand des zweiten** Kupplungsteils (22).

2. Elektromotor nach Anspruch 1
**dadurch gekennzeichnet, dass**
das Dämpfungsteil (23) an seiner äußeren Ringwand zumindest einen, nach radial außen hervorstehenden Nasenbereich (30) aufweist, der in eine am ersten Kupplungsteil (20) angeordnete Ringnut (26) hineinragt, insbesondere wobei die Ringachse der Ringnut (26) die Drehachse der Rotorwelle (1) ist, insbesondere wobei die Ringnut (26) umlaufend ist und/oder wobei der Nasenbereich (30) in Umfangsrichtung mehrfach unterbrochen ausgeführt ist,
wobei das Dämpfungsteil (23) an seiner inneren Ringwand zumindest einen, nach radial innen hervorstehenden Nasenbereich aufweist, der in eine am zweiten Kupplungsteil (22) angeordnete Ringnut (27) hineinragt, insbesondere wobei die Ringachse dieser Ringnut (27) die Drehachse der Rotorwelle (1) ist, insbesondere wobei die Ringnut (27) umlaufend ist und/oder wobei der Nasenbereich in Umfangsrichtung mehrfach unterbrochen ausgeführt ist.

3. Elektromotor nach mindestens einem der vorangegangenen Ansprüche,
**dadurch gekennzeichnet, dass**
das erste Kupplungsteil (20) an der Innenseite eine Axialnut (91) aufweist, in welche ein an der äußeren Ringwand nach radial außen hervorstehender, sich axial erstreckender Bereich, insbesondere Außenlängsnase (32), hineinragt, wobei ein erstes Spiel in Umfangsrichtung zwischen den nach radial außen hervorstehenden Bereich, insbesondere der Außenlängsnase (32) und den Nutwänden der Axialnut (91) vorhanden ist,
und/oder dass
das zweite Kupplungsteil (22) an der Außenseite zwaiten eine axial gerichtete Längsnut (90) aufweist, in welche ein an der inneren Ringwand nach radial innen hervorstehender, sich axial erstreckender Bereich, insbesondere Innenlängsnase (31), hineinragt, wobei ein zweites Spiel in Umfangsrichtung zwischen der nach radial innen hervorstehenden Bereich, insbesondere der Innenlängsnase (31), und den Nutwänden der axial gerichteten Längsnut (90) vorhanden ist.

4. Elektromotor nach mindestens einem der vorangegangenen Ansprüche,
**dadurch gekennzeichnet, dass**
am zweiten Kupplungsteil (22) ein nach radial außen hervorstehender Zapfenbereich (71) ausgeformt ist, welcher in eine am ersten Kupplungsteil (20) ausgeformte Ausnehmung (70) hineinragt, wobei ein drittes Spiel in Umfangsrichtung zwischen dem Zapfenbereich (71) und der Ausnehmung (70), insbesondere den Wänden der Ausnehmung (70), vorhanden ist, insbesondere wobei das dritte Spiel größer ist als das erste Spiel, als das zweite Spiel oder als die Summe aus erstem und zweitem Spiel, insbesondere wobei der vom Zapfenbereich (71) und die Ausnehmung (70) überdeckte axiale Bereich zwischen dem von der Rotorwelle (1) überdeckten axialen Bereich und dem vom Berührbereich zwischen Dämpfungsteil (23) und einem der beiden Kupplungsteile (20, 22) überdeckten axialen Bereich angeordnet ist,
oder dass
am zweiten Kupplungsteil (22) eine nach radial innen ausgeformte Ausnehmung ausgeformt ist, in welche ein am ersten Kupplungsteil (20) nach radial innen hervorragender Zapfenbereich hineinragt, wobei ein drittes Spiel in Umfangsrichtung zwischen dem Zapfenbereich und der Ausnehmung, insbesondere den Wänden der Ausnehmung, vorhanden ist, insbesondere wobei das dritte Spiel größer ist als das erste Spiel, als das zweite Spiel oder als die Summe aus erstem und zweitem Spiel, insbesondere wobei der vom Zapfenbereich und die Ausnehmung überdeckte axiale Bereich zwischen dem von der Rotorwelle (1) überdeckten axialen Bereich und dem vom Berührbereich zwischen Dämpfungsteil (23) und einem der beiden Kupplungsteile (20, 22) überdeckten axialen Bereich angeordnet ist.

5. Elektromotor nach mindestens einem der vorangegangenen Ansprüche,
**dadurch gekennzeichnet, dass**
das Dämpfungsteil (23) in Umfangsrichtung voneinander, insbesondere regelmäßig, beabstandete durch das Dämpfungsteil (23) durchgehende Ausnehmungen (40) aufweist,
wobei der von den Ausnehmungen (40) überdeckte axiale Bereich axial zwischen dem Jochbereich und dem vom Berührbereich zwischen Dämpfungsteil (23) und einem der beiden Kupplungsteile (20, 22) überdeckten axialen Bereich angeordnet ist.

6. Elektromotor nach mindestens einem der vorangegangenen Ansprüche,
**dadurch gekennzeichnet, dass**
die Welle (5) des Winkelsensors (8) mittels einer axial durchgehenden Stufenbohrung hohl ausgeführt ist, so dass eine Schraube durch die Welle (5) des Winkelsensors (8) hindurchgeführt ist und ein Außengewindebereich der Schraube in ein Innengewinde (29) des zweiten Kupplungsteils (22) eingeschraubt ist, wobei der Schraubenkopf
der Schraube gegen eine Stufe der Stufenbohrung drückt zum Andrücken der Welle (5) des Winkelsensors (8) an das zweite Kupplungsteil (22).

7. Elektromotor nach mindestens einem der vorangegangenen Ansprüche,
**dadurch gekennzeichnet, dass**
die Rotorwelle (1) eine axial gerichtete Gewindebohrung aufweist, in welche der Außengewindebereich einer Schraube (24) eingeschraubt ist, welche durch eine durch das erste Kupplungsteil (20)
durchgehende Stufenbohrung durchgeführt ist und deren Schraubenkopf an einer Stufe der Stufenbohrung angedrückt ist, wobei die Stufenbohrung mittig im ersten Kupplungsteil (20) angeordnet ist.

8. Elektromotor nach Anspruch 7,
**dadurch gekennzeichnet, dass** von der in die Rotorwelle eingeschraubten Schraube (24) ein außenkonusförmiger Bereich (50) des ersten Kupplungsteils (20) an einen innenkonusförmigen Bereich der Rotorwelle (1) angedrückt wird.

9. Elektromotor nach einem der Ansprüche 6 bis 8,
**dadurch gekennzeichnet, dass**
von der in das zweite Kupplungsteil (22) eingeschraubten Schraube ein außenkonusförmiger Bereich der Welle (5) des Winkelsensors (8) an einen innenkonusförmigen Bereich (28) des zweiten Kupplungsteils (22) angedrückt wird.

## Claims

1. Electric motor comprising a rotor shaft (1) and an angle sensor (8),
a shaft (5) of the angle sensor (8) being connected to the rotor shaft (1) by means of a coupling,
the coupling comprising a first and a second coupling part (20, 22),
the first coupling part (20) being connected to the rotor shaft (1) for conjoint rotation and the second coupling part (22) being connected to the shaft (5) of the angle sensor (8) for conjoint rotation,
a damping part (23) being arranged between the first and the second coupling part (20, 22), the damping part (23) being frictionally connected to the first and the second coupling part (20, 22),
**characterised in that**
the damping part (23) comprises an outer annular wall and an inner annular wall, which are connected by means of a yoke region of the damping part (23),
the outer annular wall pressing radially outwardly against a region of the first coupling part (20), in particular against the internal wall of an axially through-going cut-out in the first coupling part (20),
the inner annular wall pressing radially inwardly against a region of the second coupling part (22), in particular against the external wall of the second coupling part (22).

2. Electric motor according to claim 1,
**characterised in that**
on its outer annular wall, the damping part (23) comprises at least one radially outwardly projecting lug region (30), which protrudes into an annular groove (26) arranged on the first coupling part (20), the ring axis of the annular groove (26) in particular being the axis of rotation of the rotor shaft (1), the annular groove (26) in particular being circumferential and/or the lug region (30) being configured so as to be interrupted multiple times in the circumferential direction,
the damping part (23) comprising, on its inner annular wall, at least one radially inwardly projecting lug region, which protrudes into an annular groove (27) arranged on the second coupling part (22), the ring axis of said annular groove (27) in particular being the axis of rotation of the rotor shaft (1), the annular groove (27) in particular being circumferential and/or the lug region being configured so as to be interrupted multiple times in the circumferential direction.

3. Electric motor according to at least one of the preceding claims,
**characterised in that**
on the inside, the first coupling part (20) comprises an axial groove (91), into which there protrudes an axially extending region that projects radially outwardly on the outer annular wall, in particular an external longitudinal lug (32), a first play being present in the circumferential direction between the radially outwardly projecting region, in particular the external longitudinal lug (32), and the groove walls of the axial groove (91),
and/or **in that**
on the outside, the second coupling part (22) comprises an axially oriented longitudinal groove (90), into which there protrudes an axially extending region that projects radially inwardly on the inner annular wall, in particular an internal longitudinal lug (31), a second play being present in the circumferential direction between the radially inwardly projecting region, in particular the internal longitudinal lug (31), and the groove walls of the axially oriented longitudinal groove (90).

4. Electric motor according to at least one of the preceding claims,
**characterised in that**
on the second coupling part (22), there is moulded a radially outwardly projecting pin region (71), which protrudes into a cut-out (70) moulded on the first coupling part (20), a third play being present in the circumferential direction between the pin region (71) and the cut-out (70), in particular the walls of the cut-out (70), the third play in particular being greater than the first play, than the second play or than the total of the first and the second play,
the axial region covered by the pin region (71) and the cut-out (70) in particular being arranged between the axial region covered by the rotor shaft (1) and the axial region covered by the region of contact between the damping part (23) and one of the two coupling parts (20, 22),
or **in that**
on the second coupling part (22), there is moulded a radially inwardly moulded cut-out, into which a pin region projecting radially inwardly on the first coupling part (20) protrudes, a third play being present in the circumferential direction between the pin region and the cut-out, in particular the walls of the cut-out, the third play in particular being greater than the first play, than the second play or than the total of the first and the second play,
the axial region covered by the pin region and the cut-out in particular being arranged between the axial region covered by the rotor shaft (1) and the axial region covered by the region of contact between the damping part (23) and one of the two coupling parts (20, 22).

5. Electric motor according to at least one of the preceding claims,
**characterised in that**
the damping part (23) comprises cut-outs (40) that are spaced apart from one another, in particular regularly, in the circumferential direction and extend through the damping part (23),
the axial region covered by the cut-outs (40) being arranged axially between the yoke region and the axial region covered by the region of contact between the damping part (23) and one of the two coupling parts (20, 22).

6. Electric motor according to at least one of the preceding claims,
**characterised in that**
the shaft (5) of the angle sensor (8) is configured to be hollow by means of an axially through-going stepped hole, such that a screw is guided through the shaft (5) of the angle sensor (8) and an external-thread region of the screw is screwed into an internal thread (29) of the second coupling part (22), the screw head of the screw pressing against a step of the stepped hole in order to press the shaft (5) of the angle sensor (8) onto the second coupling part (22).

7. Electric motor according to at least one of the preceding claims,
**characterised in that**
the rotor shaft (1) comprises an axially oriented threaded hole, into which the external-thread region of a screw (24) is screwed, said screw being guided through a stepped hole extending through the first coupling part (20) and the screw head thereof being pressed on a step of the stepped hole, the stepped hole being arranged in the middle in the first coupling part (20).

8. Electric motor according to claim 7,
**characterised in that**
a male-taper-like region (50) of the first coupling part (20) is pressed onto a female-taper-like region of the rotor shaft (1) by the screw (24) that is screwed into the rotor shaft.

9. Electric motor according to any of claims 6 to 8,
**characterised in that**
a male-taper-like region of the shaft (5) of the angle sensor (8) is pressed onto a female-taper-like region (28) of the second coupling part (22) by the screw that is screwed into the second coupling part (22).

## Revendications

1. Moteur électrique muni d'un arbre de rotor (1) et d'un capteur d'angle (8), un arbre (5) du capteur d'angle (8) étant relié à l'arbre de rotor (1) par l'intermédiaire d'un accouplement, l'accouplement comprenant une première et une deuxième partie d'accouplement (20, 22), la première partie d'accouplement (20) étant reliée de manière immobile en rotation à l'arbre de rotor (1) et la deuxième partie d'accouplement (22) étant reliée de manière immobile en rotation à l'arbre (5) du capteur d'angle (8),
une partie d'amortissement (23) étant agencée entre la première et la deuxième partie d'accouplement (20, 22), la partie d'amortissement (23) étant reliée à force à la première et deuxième partie d'accouplement (20, 22), **caractérisé en ce que**
la partie d'amortissement (23) comprend une paroi annulaire extérieure et une paroi annulaire intérieure, qui sont reliées par l'intermédiaire d'une zone de culasse de la partie d'amortissement (23), la paroi annulaire extérieure exerçant une pression radialement vers l'extérieur sur une zone de la première partie d'accouplement (20), notamment contre la paroi intérieure d'un évidement axialement continu de la première partie d'accouplement (20),
la paroi annulaire intérieure exerçant une pression radialement vers l'intérieur sur une zone de la deuxième partie d'accouplement (22), notamment contre la paroi extérieure de la deuxième partie d'accouplement (22).

2. Moteur électrique selon la revendication 1, **caractérisé en ce que** la partie d'amortissement (23) comprend sur sa paroi annulaire extérieure au moins une zone de bec (30) faisant saillie radialement vers l'extérieur, qui pénètre dans une rainure annulaire (26) agencée sur la première partie d'accouplement (20), l'axe annulaire de la rainure annulaire (26) étant notamment l'axe de rotation de l'arbre de rotor (1), la rainure annulaire (26) étant notamment circonférentielle et/ou la zone de bec (30) étant réalisée sous forme interrompue à plusieurs reprises dans la direction circonférentielle, la partie d'amortissement (23) comprenant sur sa paroi annulaire intérieure au moins une zone de bec faisant saillie radialement vers l'intérieur, qui pénètre dans une rainure annulaire (27) agencée sur la deuxième partie d'accouplement (22), l'axe annulaire de cette rainure annulaire (27) étant notamment l'axe de rotation de l'arbre de rotor (1), la rainure annulaire (27) étant notamment circonférentielle et/ou la zone de bec étant réalisée sous forme interrompue à plusieurs reprises dans la direction circonférentielle.

3. Moteur électrique selon au moins l'une quelconque des revendications précédentes, **caractérisé en ce que** la première partie d'accouplement (20) comprend sur le côté intérieur une rainure axiale (91), dans laquelle pénètre une zone s'étendant axialement, faisant saillie radialement vers l'extérieur sur la paroi annulaire extérieure, notamment un bec longitudinal extérieur (32), un premier jeu étant présent dans la direction circonférentielle entre la zone faisant saillie radialement vers l'extérieur, notamment le bec longitudinal extérieur (32), et les parois de rainure de la rainure axiale (91),
et/ou **en ce que**
la deuxième partie d'accouplement (22) comprend sur le côté extérieur une rainure longitudinale orientée axialement (90), dans laquelle pénètre une zone s'étendant axialement, faisant saillie radialement vers l'intérieur sur la paroi annulaire intérieure, notamment un bec longitudinal intérieur (31), un deuxième jeu étant présent dans la direction circonférentielle entre la zone faisant saillie radialement vers l'intérieur, notamment le bec longitudinal intérieur (31), et les parois de rainure de la rainure longitudinale orientée axialement (90).

4. Moteur électrique selon au moins l'une quelconque des revendications précédentes, **caractérisé en ce qu'**une zone de tenon (71) faisant saillie radialement vers l'extérieur est formée sur la deuxième partie d'accouplement (22), qui pénètre dans un évidement (70) formé sur la première partie d'accouplement (20), un troisième jeu étant présent dans la direction circonférentielle entre la zone de tenon (71) et l'évidement (70), notamment les parois de l'évidement (70), le troisième jeu étant notamment plus grand que le premier jeu, que le deuxième jeu ou que la somme du premier et du deuxième jeu,
la zone axiale couverte par la zone de tenon (71) et l'évidement (70) étant notamment agencée entre la zone axiale couverte par l'arbre de rotor (1) et la zone axiale couverte par la zone de contact entre la partie d'amortissement (23) et une des deux parties d'accouplement (20, 22),
ou **en ce que**
un évidement formé radialement vers l'intérieur est formé sur la deuxième partie d'accouplement (22), dans lequel pénètre une zone de tenon faisant saillie radialement vers l'intérieur sur la première partie d'accouplement (20), un troisième jeu étant présent dans la direction circonférentielle entre la zone de tenon et l'évidement, notamment les parois de l'évidement, le troisième jeu étant notamment plus grand que le premier jeu, que le deuxième jeu ou que la somme du premier et du deuxième jeu,
la zone axiale couverte par la zone de tenon et l'évidement étant notamment agencée entre la zone axiale couverte par l'arbre de rotor (1) et la zone axiale couverte par la zone de contact entre la partie d'amortissement (23) et une des deux parties d'accouplement (20, 22).

5. Moteur électrique selon au moins l'une quelconque des revendications précédentes, **caractérisé en ce que** la partie d'amortissement (23) comprend des évidements continus (40) à travers la partie d'amortissement (23), espacés les uns des autres dans la direction circonférentielle, notamment régulièrement,
la zone axiale couverte par les évidements (40) étant agencée axialement entre la zone de culasse et la zone axiale couverte par la zone de contact entre la partie d'amortissement (23) et une des deux parties d'accouplement (20, 22).

6. Moteur électrique selon au moins l'une quelconque des revendications précédentes, **caractérisé en ce que** l'arbre (5) du capteur d'angle (8) est réalisé sous forme creuse au moyen d'un perçage échelonné axialement continu, de telle sorte qu'une vis est passée à travers l'arbre (5) du capteur d'angle (8), et une zone de filetage extérieur de la vis est vissée dans un filetage intérieur (29) de la deuxième partie d'accouplement (22), la tête de vis de la vis exerçant une pression sur un échelon du perçage échelonné pour serrer l'arbre (5) du capteur d'angle (8) contre la deuxième partie d'accouplement (22).

7. Moteur électrique selon au moins l'une quelconque des revendications précédentes, **caractérisé en ce que** l'arbre de rotor (1) comprend un perçage fileté orienté axialement, dans lequel la zone de filetage extérieur d'une vis (24) est vissée, qui est passée à travers un perçage échelonné continu à travers la première partie d'accouplement (20) et dont la tête de vis est serrée contre un échelon du perçage échelonné, le perçage échelonné étant agencé au centre dans la première partie d'accouplement (20).

8. Moteur électrique selon la revendication 7, **caractérisé en ce qu'**une zone conique extérieure (50) de la première partie d'accouplement (20) est serrée contre une zone conique intérieure de l'arbre de rotor (1) par la vis (24) vissée dans l'arbre de rotor.

9. Moteur électrique selon l'une quelconque des revendications 6 à 8, **caractérisé en ce qu'**une zone conique extérieure de l'arbre (5) du capteur d'angle (8) est serrée contre une zone conique intérieure (28) de la deuxième partie d'accouplement (22) par la vis vissée dans la deuxième partie d'accouplement (22).
